# EUROPEAN PATENT SPECIFICATION

(11) **EP 2 141 194 B1**
(45) Date of publication and mention of the grant of the patent: **10.04.2013**
(21) Application number: 09164081.3
(22) Date of filing: 30.06.2009
(51) Int. Cl.: C08K 5/09, B65B 9/00

(54) **Package and process for producing thermoplastic resin film**
Packung und verfahren zur herstellung einer thermoplastischen harzfolie
Emballage et procédé de production de film à résine thermoplastique

(30) Priority: 30.06.2008 JP 2008169820
(43) Date of publication of application: 06.01.2010
(73) Proprietor: Sumitomo Chemical Company, Limited, Tokyo 104-8260 (JP)
(72) Inventor: Kimura, Kenji, Funabashi-shi Chiba (JP)
(74) Representative: Vossius & Partner

(56) References cited:
- WO-A1-2005/059021

## Description

The present invention relates to a package of a specific compound.

When a film is formed from a thermoplastic resin, generally, an antioxidant and a stabilizer are added to the thermoplastic resin in order to improve the processing stability of the resin and to prevent coloring of the resin. As the antioxidant to be added to the thermoplastic resin, there have been used a variety of phenol-based, phophorus-based and sulfur-based compounds. The present applicant has found out that bisphenol monoester-based compounds of the following formula (1), among those compounds, show superior processing stability, and has proposed the use thereof (cf. Patent Publication 1). 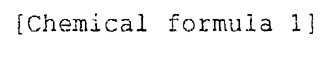 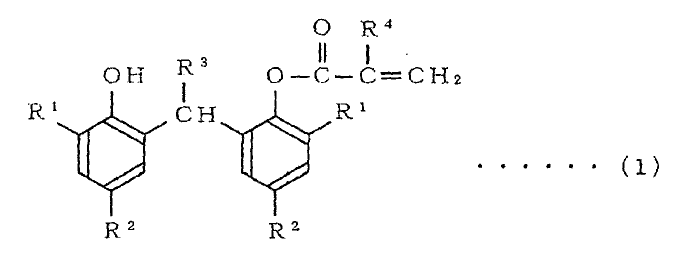 wherein each of R¹ and R² is independently an alkyl group having 1 to 5 carbon atom(s); R³ is a hydrogen atom or an alkyl group having 1 to 3 carbon atom(s); and R⁴ is a hydrogen atom or a methyl group.
Patent Publication 1: JP-A-1-168643/1989

The compound of the formula (1), packaged in a paper bag, is transported and stored; and the compound is taken out of the paper bag by opening it with a cutter in a manufacturing site, and is then added to a thermoplastic resin.

However, the following problem occurs when a non-skilled operator roughly opens the paper bag including the compound of the formula (1) with a cutter : that is, a resin film, if produced from a resin admixed with the compound taken out of the above-described bag, is likely to have fish eye gels therein, and the performance of such a resin film markedly degrades.

Thus, means for inhibiting occurrence of such fish eye gels in resin films have been researched.

Under such a situation, the present inventor has intensively studied the packages of the compounds of the formula (1) and accomplished the present invention as a result of such studies. That is, the feature of a package according to the present invention rests in that the compound of the formula (1) is packaged in a bag which comprises a thermoplastic resin as a main component.

In this regard, the film thickness of the bag is preferably from 50 to 200 µm.

Again, according to the present invention, there is provided a process for producing a thermoplastic resin film, wherein the compound of the formula (1) is taken out of the bag which comprises the thermoplastic resin as the main component, and is then added to a thermoplastic resin which may be the same as or different from the former thermoplastic resin to obtain a composition; and in that the resultant composition is formed into a film.

Again, according to the present invention, there is provided a process for producing a thermoplastic resin film, wherein the compound of the formula (1) packaged in a bag which comprises a first thermoplastic resin as a main component is added while being the compound in the bag to a second thermoplastic resin which is the same as the first thermoplastic resin to obtain a composition; and in that the resultant composition is formed into a film.

The amount of the compound of the formula (1) to be added is preferably from 0.01 to 5 parts by weight per 100 parts by weight of the first thermoplastic resin.

In the package according to the present invention, the compound of the formula (1) is packaged in the bag which comprises the thermoplastic resin as the main component. Therefore, even when an operator takes out the compound by roughly opening the bag with a cutter and adds the compound to a thermoplastic resin so as to form a resin film, occurrence of fish eye gels in such a resin film can be inhibited.

In the process for producing a thermoplastic resin film according to the present invention, the compound of the formula (1) packaged in the bag which comprises the first thermoplastic resin as the main component is added while being the compound in the bag to the second thermoplastic resin which is the same as the first thermoplastic resin. Therefore, there is no need to take the compound out of the bag, which leads to improvement of the labor effectiveness.

Firstly, the package according to the present invention will be described. One of the significant features of the package of the present invention rests in that the above-described compound of the formula (1) is packaged in a bag which comprises a thermoplastic resin as a main component. The present inventor has found out the fact that fish eye gels are more likely to occur in a film when an operator roughly opens a paper bag filled with the compound of the formula (1) with a cutter . In the present invention, there is used a bag which comprises a thermoplastic resin as a main component, differently from the conventional paper bag. Therefore, even if an operator roughly opens such a bag in a manufacturing site and produces a film using a resin admixed with the compound of the formula (1) which is taken out of the roughly opened bag, occurrence of fish eye gels in the resultant film can be inhibited.

As the package of the present invention, for example, the above-described compound is packed in a rectangular bag having one side as an opening, and the opening of the bag is closed by heat seal . There is no limit in selection of the shape of the bag to be used in the present invention: the bag may be cylindrically shaped or may be in the shape of a rectangular envelope or preferably in the shape of an envelope with a gore. There is also no limit in selection of the method for manufacturing the bag: for example, a mixture of a thermoplastic resin with other additives is kneaded under heating to obtain a homogeneous resin composition, which is then formed into a film by inflation or T-die extrusion; and the resultant film is made into a bag by heat press, cutting, and other steps.

The film thickness of the bag to be used in the present invention is preferably from 50 to 200 µm. When the film thickness is 50 µm or more, preferably, the bag has a high strength and is hardly torn or damaged during the transportation thereof. On the other hand, when the film thickness is 200 µm or less, preferably, the bag can be easily opened with a cutter, and the handling of the bag is facilitated. The film thickness of the bag is more preferably from 130 to 190 µm. As for the strength of the bag, a maximum stress is preferably from 30 to 50 MPa, and a maximum displacement is preferably from 350 to 500 mm. A maximum stress of 30 MPa or more and a maximum displacement of 350 mm or more are preferable because the possibility to rupture the bag during the transportation of the package becomes lower. A maximum stress of 50 MPa or less and a maximum displacement of 500 mm or less are preferable because there is no need to increase the thickness of the bag or to take a measure to add a reinforcing material for reinforcement of the bag.

The thermoplastic resin as the main component of the bag to be used in the present invention may be any of known ones. Examples thereof include polyolefins, polystyrenes, polyesters, . Preferable among the polyolefins are polyethylenes (e.g., low-density polyethylene, high-density polyethylene and linear low-density polyethylene), . Preferable among the polystyrenes are high impact polystyrene, styrene-butadiene copolymers, .

Additives may be added to the above-described thermoplastic resin: examples of the additives include a UV absorber, a photo-stabilizer, an antioxidant, a metal inactivating agent, a nucleating agent, a lubricant, an antistatic agent, a flame retardant, a filler, a pigment, a plasticizer, an antiblocking agent, a surfactant, a processing aid, a foaming agent, an emulsifier, a brightening agent, calcium stearate and hydrotalcite.

It is preferable not to laminate paper of a paper bag on the bag of the present invention. It is also preferable not to bond paper of a paper bag to the bag of the present invention. In particular, it is preferable not to allow paper to be present around the opening of the bag of the present invention.

In the compound of the formula (1), each of R¹ and R² is independently an alkyl group having 1 to 5 carbon atom(s), specifically a methyl group, an ethyl group, a n-propyl group, an isopropyl group, a n-butyl group, an isobutyl group, a sec-butyl group, a tert-butyl group, a n-pentyl group, a tert-pentyl group or the like. Particularly, R¹ is preferably an alkyl group having a tertially carbon atom, i.e., a tert-butyl group or a tert-pentyl group. R² is preferably a methyl group, a t-butyl group or a t-pentyl group. R³ is a hydrogen atom or an alkyl group having 1 to 3 carbon atom(s), specifically a methyl group, an ethyl group, a n-propyl group or an isopropyl group, and particularly, R³ is a hydrogen atom or a methyl group. R⁴ is a hydrogen atom or a methyl group.

Specific examples of the compound of the formula (1) include 2,4-di-t-(pentyl-6-[1-(3,5-di-t-pentyl-2-hydroxyphenyl)ethyl]phenyl acrylate, 2-[1-(2-hydroxy-3,5-di-t-pentylphenyl)ethyl-4,6-di-t-pentylphenyl methacrylate, 2,4-di-t-butyl-6-[1-(3,5-di-t-butyl-2-hydroxyphenyl)ethyl]phenyl acrylate, 2,4-di-t-butyl-6-[1-(3,5-di-t-butyl-2-hydroxyphenyl)ethyl]phenyl methacrylate, 2-t-butyl-6-[1-(3-t-butyl-2-hydroxy-5-methyphenyl)ethyl]-4-methyphenyl acrylate, 2-t-butyl-6-[1-(3-t-butyl-2-hydroxy-5-methyphenyl)propyl-4-metylphenyl acrylate, 2-t-butyl-6-[1-(3-t-butyl-2-hydroxy-5-propylphenyl)ethyl]-4-propylphenyl acrylate, 2-t-butyl-6-[1-(3-t-butyl-2-hydroxy-5-isopropylphenyl)ethyl]-4-isopropylphenyl acrylate, 2-t-butyl-6-[1-(3-t-butyl-2-hydroxy-5-methylphenyl)methyl-4-methylphenyl acrylate, . Among them, 2,4-di-t-pentyl-6-[1-(3,5-di-t-pentyl-2-hydroxyphenyl)ethyl]phenyl acrylate and 2-t-butyl-6-[1-(3-t-butyl-2-hydroxy-5-methylphenyl)methyl]-4-methylphenyl acrylate are preferable because these compounds are able to impart superior processing-stabilizing effects to the thermoplastic polymers.

For example, the compound of the formula (1) can be produced by a reaction of a bisphenol of the following formula (2) with a carboxylic acid-based compound of the following formula (3). Preferably, the compound of the formula (1) obtained by this reaction is further purified, for example, by the method disclosed in JP-A-4-327558/1992: that is, the compound of the formula (1) is preferably purified by crystallization thereof in a solvent mixture of a first solvent selected from aromatic hydrocarbons each having 6 to 12 carbon atoms and a second solvent selected from alcohols each having 1 to 8 carbon atom(s) and aliphatic nitriles each having 2 to 3 carbon atoms. 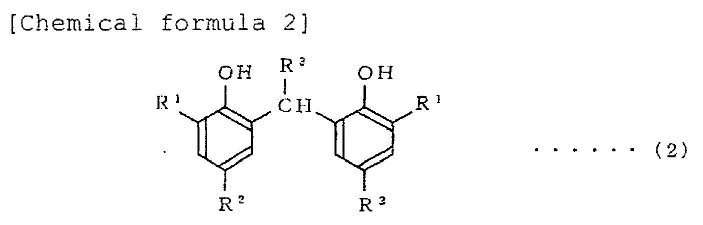 wherein each of R¹ and R² is independently an alkyl group having 1 to 5 carbon atom(s); and R³ is a hydrogen atom or an alkyl group having 1 to 3 carbon atom(s). 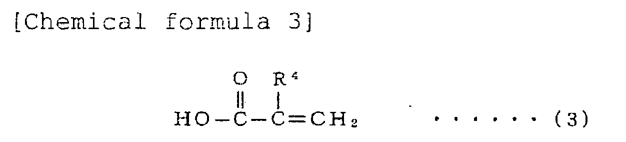 wherein R⁴ is a hydrogen atom or a methyl group.

Examples of the aromatic hydrocarbon having 6 to 12 carbon atoms as the first solvent for use in the above-described purification include benzene, toluene, xylene, ethylbenzene, cumene, cymene, chlorobenzene, . Each of these solvents may be used alone, or two or more thereof may be used in combination. Among them, toluene or xylene is preferably used, and xylene is particularly preferred.

Examples of the alcohols each having 1 to 8 carbon atom(s) as the second solvent for use in the above-described purification include methanol, ethanol, n-propanol, isopropanol, n-butanol, isobutanol, tert-butanol, n-pentanol, n-octanol, 2-ethylhexanol, cyclohexanol, . Examples of the aliphatic nitriles each having 2 to 3 carbon atoms include acetonitrile, propionitrile, . Any one selected from these alcohols and aliphatic nitrites may be used alone, or two or more selected therefrom may be used in combination.

The compound of the formula (1) may be a commercially available compound, and preferable examples thereof include Sumilizer GS(F), Sumilizer GS, Sumilizer GM and Sumilizer GM(F) (manufactured by Sumitomo Chemical Company, Limited), .

In general, the compound of the formula (1) may be in the form of powder, granules, pellets, flakes or the like.

Next, the process for producing the thermoplastic resin film according to the present invention will be described. Firstly, the compound of the formula (1) is taken out of the bag which comprises the first thermoplastic resin as a main component. The method of taking the above-described compound out of the bag is not limited, and a cutter or the like may be used to open the bag as in the conventional methods.

Next, the compound thus taken out is added to the second thermoplastic resin. In this regard, the second thermoplastic resin to be admixed with this compound may be the same as or different from the first thermoplastic resin as the main component of the bag. When the second thermoplastic resin is the same as the first thermoplastic resin as the main component of the bag, there is no need to take the compound out of the bag, and the compound packaged in the bag may be added while being the compound in the bag to the second thermoplastic resin. Thus, the labor effectiveness is improved because of no need to take the compound out of the bag.

There is no limit in selection of the second thermoplastic resin to be admixed with the above-described compound. Examples of the second thermoplastic resin include polypropylene-based resins such as polypropylene homopolymers, propylene/ethylene copolymers and propylene/ethylene/α-olefin terpolymers; polyethylene-based resins such as high density polyethylens (HD-PE), low-density polyethylenes (LD-PE), linear low-density polyethylenes (LLDPE), ethylene/vinyl acetate copolymers, ethylene/acrylic ester copolymers, ethylene/vinyl alcohol copolymers, ethylene/propylene copolymers and ethylene/MMA copolymers; polyester-based resins such as aromatic polyester resins; polyethylene terephthalate; polybutylene terephthalate; polystyrene-based resins such as polystyrene, acrylonitrile/styrene copolymers, styrene/butadiene compolymers, styrene/acrylonitrile/butadiene terpolymers, high impact polystyrene poly(p-methylstyrene) and poly(α-methylstyrene); polychloroprene; chlorinated rubber; polyvinyl chloride; polyvinylidene chloride; methacrylic resins; fluororesins; polyacetal; grafted polyphenylene ether resins; polyphenylene sulfide resins; polyurethane; polyamide; polycarbonate; polyacrylate; polysulfone; polyether ether ketone; polyethersulfone; silicone resins; 1,2-polybutadiene; polyisoprene; butadiene/acrylonitrile copolymers; etc. Among them, polyethylene-based resins, polypropylene-based resins and polystyrene-based resins are preferable because of their superior molding processability.

In this regard, the polypropylene-based resin means a polyolefin having a structural unit derived from propylene. Specific examples thereof include crystalline propylene homopolymers, propylene-ethylene random copolymers, propylene-α-olefin random copolymers, propylene-ethylene-α-olefin copolymers, and polypropylene-based block copolymers each of which comprises a propylene homopolymer component or a copolymer component mainly comprising propylene, and a copolymer component comprising propylene, ethylene and/or α -olefin.

When a polypropylene-based resin is used as the thermoplastic resin to be admixed with the above-described compound, one of the above-described polypropylene-based resins may be used alone; or two or more thereof may be used as a mixture.

The α-olefin is usually an α-olefin having 4 to 12 carbon atoms, and examples thereof include 1-butene, 1-pentene, 1-hexene, 4-methyl-1-pentene, 1-octene, 1-decene, etc., among which 1-butene, 1-hexene and 1-octene are preferable.

Examples of the propylene-α-olefin random copolymer include a propylene-1-butene random copolymer, a propylene-1-hexene random copolymer, a propylene-1-octene random copolymer, etc.

Examples of the propylene-ethylene-α-olefin copolymer include a propylene-ethylene-1-butene copolymer, a propylene-ethylene-1-hexene copolymer, a propylene-ethylene-1-octene copolymer, .

In the polypropylene-based block copolymer which comprises the propylene homopolymer component or the copolymer component mainly comprising propylene, and the copolymer component comprising propylene and ethylene and/or α-olefin, examples of the copolymer component mainly comprising propylene include a propylene-ethylene copolymer component, a propylene-1-butene copolymer component, a propylene-1-hexene copolymer component, etc.; and examples of the copolymer component of propylene and ethylene and/or α-olefin include a propylene-ethylene copolymer component, a propylene-ethylene-1-butene copolymer component, a propylene-ethylene-1-hexene copolymer component, a propylene-ethylene-1-octene copolymer component, a propylene-1-butene copolymer component, a propylene-1-hexene copolymer component, a propylene-1-octene copolymer component, etc. Herein, the content(s) of ethylene and/or α-olefin having 4 to 12 carbon atoms in the copolymer component comprising propylene and ethylene and/or α-olefin is/are usually from 0.01 to 20% by weight.

Examples of the polypropylene-based block copolymer which comprises the propylene homopolymer component or the copolymer component mainly comprising propylene, and the copolymer component comprising propylene and ethylene and/or α-olefin include a propylene-ethylene block copolymer, a (propylene)-(propylene-ethylene) block copolymer, a (propylene)-(propylene-ethylene-1-butene) block copolymer, a (propylene)-(propylene-ethylene-1-hexene) block copolymer, a (propylene)-(propylene-1-butene) block copolymer, a (propylene)-(propylene-1-hexene) block copolymer, a (propylene-ethylene)-(propylene-ethylene-1-butene) block copolymer, a (propylene-ethylene)-(propylene-ethylene-1-hexene) block copolymer, a (propylene-ethylene)-(propylene- 1-butene) block copolymer, a (propylene-ethylene)-(propylene -1-hexene) block copolymer, a (propylene-1-butene)-(propylene-ethylene) block copolymer, a (propylene-l-butene)-(propylene-ethylene-1-butene) block copolymer, a (propylene-1-butene)-(propylene-ethylene-1-hexene) block copolymer, a (propylene-1-butene)-(propylene-1-butene) block copolymer, a (propylene-1-butene)-(propylene-1-hexene) block copolymer .

When a polypropylene-based resin is used as the second thermoplastic resin to be admixed with the above-described compound, the polypropylene-based resin is preferably a crystalline propyrene homopolymer, or a polypropyrene-based block copolymer which comprises a propylene homopolymer component or a copolymer component mainly compirising propylene, and a copolymer component comprising propylene, ethylene and/or α-olefin having 4 to 12 carbon atoms. The polypropylene-based resin is more preferably a polypropylene-based block copolymer which comprises a propylene homopolymer component or a copolymer component mainly comprising propylene, and a copolymer component comprising propylene, ethylene and/or α-olefin having 4 to 12 carbon atoms.

The amount of the compound of the formula (1) to be added is preferably from 0.01 to 5 parts by weight per 100 parts by weight of the second thermoplastic resin. The addition of less than 0.01 part by weight of the compound tends to lower the processing-stabilizing effect. The addition of more than 5 parts by weight of the compound is more likely to cause bleeding of the same compound out to the surface of the resultant film. The amount of the compound to be added is more preferably from 0.01 to 2 parts by weight.

The method of adding the compound to the second thermoplastic resin is not limited, and any of the known methods may be employed. For example, a container rotation type mixer or a stirrer type mixer is used to add the compound; or a solution of the compound in a solvent such as cyclohexane is added to a solution of the thermoplastic resin obtained by solution polymerization, and the solvent is removed from the resulting mixture.

In addition to the above-described compound, conventional additives may be added to the second thermoplastic resin, to an extent that the effect of the present invention is not impaired. As such additives, the same ones as the above-described additives are exemplified.

Next, a film is formed of the composition comprising the second thermoplastic resin and the above-described compound. As the film-forming method, there can be employed any of the known methods such as the melt extrusion method (e.g., the inflation method or the T-die method), the melt casting method and the calendering method, among which the melt extrusion method such as the inflation method or the T-die method is preferable.

The thickness of the resultant thermoplastic resin film is usually from 5 to 200 µm, preferably from 10 to 150 µm.

For example, the thermoplastic resin film formed as above is preferably used as a packaging film for foods and daily sundries, a packaging film for electronic components, a packaging film for medical instruments, a masking film .

### EXAMPLES

Hereinafter, the present invention will be described in more detail by way of Examples thereof, which should not be construed as limiting the scope of the present invention in any way.

### (Manufacturing of Bag of Thermoplastic Resin)

A cylindrically shaped low-density polyethylene film made using an inflatable film-forming apparatus was sealed at its lower end with an automatic heat sealer, and the upper end thereof was cut with an automatic cutter to obtain an envelope-like bag. The size of this bag was 48 cm in lateral width X 80 cm in vertical length X 180 µm in film thickness. The strength of the bag was measured according to the procedure described in JIS K 7113. The dumbbell used is a No. 2 test peace; the pulling rate was 50 mm/min.; the distance between the marked lines was 25 mm; the distance between the chucks was 80 mm; the maximum stress in the vertical direction was from 40 to 44 MPa; and the maximum point displacement was from 420 to 440 mm. In the results of the measurement in the lateral direction, the maximum stress was from 40 to 46 MPa; and the maximum point displacement was from 450 to 480 mm.

### Example 1

A bisphenol zronoester-based compound A ("Sumilizer GS" manufactured by Sumitomo Chemical Company, Limited) (20 kg) was packed in a low-density polyethylene bag (80 cm in vertical direction X 48 cm in lateral direction X 180 µm in film thickness), using an automatic packing machine, and the opening of the bag was heat-sealed to prepare a package.
Then, the packaged prepared as above was opened with a cutter knife to take out and add the bisphenol monoester-based compound A (0.5 parts by weight) to 100 parts by weight of a low-density polyethylene, and the mixture was dry-blended; and the resulting composition was extruded at 170°C, using a single screw extruder with a diameter of 30 mm, to obtain polyethylene pellets. Then, the polyethylene pellets were charged in an inflatable film-forming apparatus with a diameter of 40 mm to form a polyethylene film with a thickness of 30 µm. A fish eye counter was used to measure fish eye gels during the formation of the film. As a result, the number of fish eye gels was 166/m² (the size of gels: 0.2 mm or more).

### Example 2

A polyethylene film with a thickness of 30 µm was made in the same manner as in Example 1, except that a bisphenol monoester-based compound B ("Sumilizer GM" manufactured by Sumitomo Chemical Company, Limited) (0.5 parts by weight) was added instead of the bisphenol monoester-based compound A (0.5 parts by weight) used in Example 1. The number of fish eye gels was measured in the same manner as in Example 1. As a result, it was 159/m² (the size of gels: 0.2 mm or more).

### Example 3

A polyethylene film with a thickness of 30 µm was made in the same manner as in Example 2, except that the amount of the bisphenol monoester-based compound B was changed to 0.1 part by weight. The number of fish eye gels was measured in the same manner as in Example 1. As a result, it was 144/m² (the size of gels: 0.2 mm or more).

### Comparative Example 1

A package was made in the same manner as in Example 1, except that a paper bag made of a three-layered craft paper was used instead of the polyethylene bag.
Then, the package was opened with a cutter knife to take out and add the bisphenol monoester-based compound A (0.5 parts by weight) to 100 parts by weight of the low-density polyethylene, and the mixture was dry-blended. Then, a polyethylene film with a thickness of 30 µm was made of the resulting composition in the same manner as in Example 1. The number of fish eye gels was measured in the same manner as in Example 1. As a result, it was 299/m² (the size of gels: 0.2 mm or more).

The package and the packaging method of the present invention are useful, because, even if the bag was roughly opened with a cutter , no paper chip arises as in the conventional method; and because, when a resin film is formed of a thermoplastic resin composition comprising the above-described compound, occurrence of fish eye gels can be suppressed.

## Claims

1. A package obtained by packing a compound of the formula (1) in a bag comprising a thermoplastic resin as a main component: 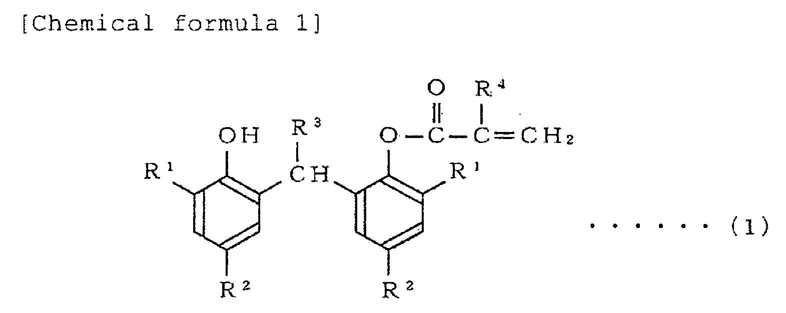 wherein each of R¹ and R² is independently an alkyl group having 1 to 5 carbon atom(s); R³ is a hydrogen atom or an alkyl group having 1 to 3 carbon atom(s); and R⁴ is a hydrogen atom or a methyl group.

2. The package of Claim 1, wherein the film thickness of the bag is from 50 to 200 µm.

3. A process for forming a thermoplastic resin film, wherein the compound of the formula (1) of claim 1 packed in a bag comprising a first thermoplastic resin as a main component is taken out of the bag, and is added to a second thermoplastic resin which may be the same as or different from the first thermoplastic resin to obtain a composition; and the composition is formed into a film.

4. A process for forming a thermoplastic resin film, wherein the compound of the formula (1) of claim 1 packed in a bag comprising a first thermoplastic resin as a main component is added while being the compound in the bag to a second thermoplastic resin which is the same as the first thermoplastic resin to obtain a composition; and the composition is formed into a film.

5. The method of Claim 3 or 4, wherein the amount of the compound of the formula (1) to be added is from 0.01 to 5 parts by weight per 100 parts by weight of the second thermoplastic resin.

## Patentansprüche

1. Eine Packung, die durch Verpacken einer Verbindung der Formel (1) in einen Beutel, der ein thermoplastisches Harz als einen Hauptbestandteil umfasst, erhalten wird: 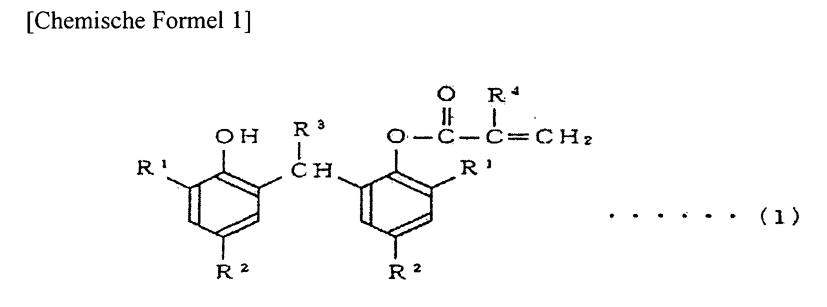 wobei jedes von R¹ und R² unabhängig ein Alkylrest mit 1 bis 5 Kohlenstoffatom(en) ist; R³ ein Wasserstoffatom oder ein Alkylrest mit 1 bis 3 Kohlenstoffatom(en) ist; und R⁴ ein Wasserstoffatom oder eine Methylgruppe ist.

2. Die Packung nach Anspruch 1, wobei die Foliendicke des Beutels 50 bis 200 µm beträgt.

3. Ein Verfahren zum Herstellen einer thermoplastischen Harzfolie, wobei die Verbindung der Formel (1) nach Anspruch 1, die in einen Beutel, der als einen Hauptbestandteil ein erstes thermoplastisches Harz umfasst, verpackt ist, aus dem Beutel herausgenommen wird und einem zweiten thermoplastischen Harz, das gleich dem ersten thermoplastischen Harz sein kann oder sich von diesem unterscheiden kann, zugegeben wird, um eine Zusammensetzung zu erhalten; und aus der Zusammensetzung eine Folie hergestellt wird.

4. Ein Verfahren zum Herstellen einer thermoplastischen Harzfolie, wobei die Verbindung der Formel (1) nach Anspruch 1, die in einen Beutel, der als einen Hauptbestandteil ein erstes thermoplastisches Harz umfasst, verpackt ist, einem zweiten thermoplastischen Harz, das gleich dem ersten thermoplastischen Harz ist, zugegeben wird, während sich die Verbindung in dem Beutel befindet, um eine Zusammensetzung zu erhalten; und aus der Zusammensetzung eine Folie hergestellt wird.

5. Das Verfahren nach Anspruch 3 oder 4, wobei die zuzugebende Menge der Verbindung der Formel (1) 0,01 und 5 Gewichtsteile pro 100 Gewichtsteile des zweiten thermoplastischen Harzes beträgt.

## Revendications

1. Emballage obtenu en emballant un composé de formule (1) dans un sac comprenant une résine thermoplastique comme composant principal: 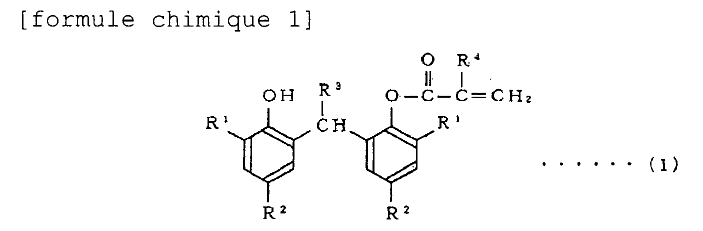 dans laquelle chacun de R¹ et R² est indépendamment un groupement alkyle présentant 1 à 5 atomes de carbone; R³ est un atome d'hydrogène ou un groupement alkyle ayant de 1 à 3 atomes de carbone; et R⁴ est un atome d'hydrogène ou un groupement méthyle.

2. Emballage selon la revendication 1, dans lequel l'épaisseur de pellicule du sac va de 50 à 200 µm.

3. Processus de formation d'une pellicule de résine thermoplastique, dans lequel le composé de formule (1) de la revendication 1 emballé dans un sac comprenant une première résine thermoplastique comme composant principal, est sorti du sac, et est ajouté à une deuxième résine thermoplastique qui peut être la même ou une différente de la première résine thermoplastique en vue d'obtenir une composition; et la composition est formée en une pellicule.

4. Processus de formation d'une pellicule de résine thermoplastique, dans lequel le composé de formule (1) de la revendication 1 emballé dans un sac comprenant une première résine thermoplastique comme composant principal est ajouté, tout en étant le composé dans le sac, à une deuxième résine thermoplastique qui est la même que la première résine thermoplastique en vue d'obtenir une composition; et la composition est formée en une pellicule.

5. Procédé selon la revendication 3 ou 4, dans lequel la quantité du composé de formule (1) à ajouter va de 0,01 à 5 parties en poids pour 100 parties en poids de la deuxième résine thermoplastique.
